(19) Europäisches Patentamt
European Patent Office
Office européen des brevets

(11) Veröffentlichungsnummer: **0 169 811**
**B1**

(12) **EUROPÄISCHE PATENTSCHRIFT**

(45) Veröffentlichungstag der Patentschrift: **14.11.90**

(51) Int. Cl.$^5$: **C 09 B 67/00**

(21) Anmeldenummer: **85810331.0**

(22) Anmeldetag: **19.07.85**

# (54) Verfahren zur Herstellung lagerstabiler wässriger Präparate von anionischen Farbstoffen.

(30) Priorität: **25.07.84 CH 3601/84**

(43) Veröffentlichungstag der Anmeldung:
**29.01.86 Patentblatt 86/05**

(45) Bekanntmachung des Hinweises auf die Patenterteilung:
**14.11.90 Patentblatt 90/46**

(84) Benannte Vertragsstaaten:
**BE CH DE FR GB IT LI**

(56) Entgegenhaltungen:
**EP-A-0 108 721**
**DE-A-2 805 891**
**DE-A-2 816 539**
**DE-A-3 305 012**
**US-A-3 932 127**

(73) Patentinhaber: **CIBA-GEIGY AG**
**Klybeckstrasse 141**
**CH-4002 Basel (CH)**

(72) Erfinder: **Podder, Nitya Gopal, Dr.**
**Erlenstrasse 18**
**CH-4127 Birsfelden (CH)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft ein Verfahren zur Herstellung von lagerstabilen wässrigen Präparaten von anionischen Farbstoffen, die nach dem Verfahren hergestellten Farbstoffdispersionen, sowie deren Verwendung zum Färben und Bedrucken von natürlichem oder synthetischem Fasermaterial.

Flüssige Farbstoffpräparate, Lösungen oder Dispersionen, weisen gegenüber den Pulverformen eine Reihe von Vorteilen auf, z.B. keine Staubentwicklung beim Ansetzen von Klotz- und Färbeflotten oder auch Druckpasten, keine Benetzungsprobleme durch Klumpenbildung, keine fleckigen Färbungen durch ungenügend gelöste oder nicht genügend feinverteilte Farbstoffteilchen.

Die Haltbarkeit von Flüssigpräparaten ist jedoch bei der Lagerung über längere Zeiträume oft nur unbefriedigend verglichen mit entsprechend formulierten Farbstoffpulvern oder Granulaten. Besondere Probleme ergeben sich hier mit anionischen Farbstoffen, die nur eine beschränkte Wasserlöslichkeit aufweisen. Von derartigen Farbstoffen erhält man keine echten Lösungen. Auch wenn sich der Farbstoff in der Hitze vollständig löst, so kristallisiert beim Abkühlen ein Teil wieder aus, oder es entsteht eine kolloidale Lösung. Durch die, in solchen Lösungen vorhandenen Kristallkeime kommt es während der Lagerung zu Rekristallisationserscheinungen und es bilden sich mehr oder weniger grosse Agglomerate, die sich vor allem bei der Anwendung dieser Präparate im Textildruck in Form von Sprickeln als besonders störend bemerkbar machen.

Darüber hinaus kann es auch bereits bei der Herstellung solcher Farbstoffe zu Komplikationen kommen, nämlich dann, wenn, wie heute vielfach üblich, der aus der Synthese stammende Salzgehalt der Farbstoffe mittels eines Membrantrennverfahrens verringert werden soll. Hier verstopfen die durch Rekristallisation und Agglomeration entstandenen Farbstoffpartikel vielfach die feinen Membrankanäle und verursachen so einen drastischen Abfall der Durchflussgeschwindigkeit.

Um die Rekristallisation beschränkt wasserlöslicher Farbstoffe zu verhindern, gibt es grundsätzlich zwei Möglichkeiten. Zum einen kann man den Farbstoff durch Zusatz geeigneter organischer Lösungsmittel auch bei Raumtemperatur vollständig in Lösung bringen. Derartige echte Lösungen sind auch über längere Zeiträume im allgemeinen stabil und neigen nicht zur Bildung von Ausfällungen oder Agglomeraten. Lösungsmittelzusätze können sich jedoch nachteilig auf das Färberesultat auswirken, sind aus betriebshygienischen Gründen eher unerwünscht und bedingen zudem eine Belastung der Färbereiabwässer. Die zweite Möglichkeit besteht darin, den Farbstoff durch Variation des Kations in ein Farbsalz mit möglichst geringer Wasserlöslichkeit zu überführen, sodass der Farbstoff weitgehend in dispergierter Form vorliegt. Eine Methode die sehr farbstoffspezifisch ist, umfangreiche Vorversuche erfordert und nur bei wenigen Farbstoffen zum Erfolg führt.

Die Lösung des Problems besteht nun darin, den Farbstoff durch Ionenaustausch reversibel an einen kationischen polymeren Träger zu binden und auf diese Weise praktisch vollständig in eine wasserunlösliche Form zu überführen.

Gegenstand der Erfindung ist somit ein Verfahren zur Herstellung lagerstabiler wässriger Präparate von anionischen Farbstoffen, das dadurch gekennzeichnet ist, dass man den in Wasser gelösten und/oder suspendierten Farbstoff mit einem polymeren Anionenaustauscher behandelt, den austauschergebundenen Farbstoff gleichzeitig damit und/oder im Anschluss daran in Gegenwart eines nichtionischen Dispergiermittels einer mechanischen Nasszerkleinerung unterwirft, und die wässrige Dispersion mit den in Farbstoffflüssigformulierungen üblicherweise enthaltenen Hilfsmitteln versetzt.

Als anionische Farbstoffe kommen beispielsweise Nitro-, Aminoketon-, Ketonimin-, Methin-, Nitrodiphenylamin-, Chinolin-, Aminonaphthochinon- oder Cumarinfarbstoffe in Frage und insbesondere Anthrachinon-, Phthalocyanin- und Azofarbstoffe, wie Monoazo- und Disazofarbstoffe. Die Farbstoffe gehören den unterschiedlichsten Klassen an, und zwar handelt es sich z.B. um Säure-, Direkt-, Metallkomplex- oder auch Reaktivfarbstoffe.

Diese Farbstoffe enthalten mindestens eine anionische wasserlöslichmachende Gruppe, wie z.B. eine Carbonsäure- oder insbesondere eine Sulfonsäuregruppe. Die Farbstoffe liegen dabei im allgemeinen in ihrer Salzform vor, wie z.B. als Lithium-, Natrium-, Kalium- oder Ammoniumsalz. Die Farbstoffe sind wasserlöslich und zwar lösen sich in 1 Liter Wasser von 20°C ca. 2 bis 30 g Farbstoff. Sie können sowohl als reines Farbstoffpulver oder auch als salzhaltiger Rohfarbstoff, ferner als wasserfeuchter Farbstoffpresskuchen oder auch direkt in Form der, aus der Synthese stammenden Farbstofflösung oder Suspension verwendet werden. Es versteht sich von selbst, dass das Verfahren auch mit Farbstoffmischungen durchführbar ist, und zwar sowohl mit Mischungen von Farbstoffen der gleichen Farbstoffklasse, als auch verschiedener Farbstoffklassen. In Frage kommen beispielsweise Mischungen von Säure-, Direkt- oder Reaktivfarbstoffen mit Metallkomplexfarbstoffen; oder von Direktfarbstoffen mit Reaktiv- oder Säurefarbstoffen; oder Mischungen aus Reaktiv- und Säurefarbstoffen. Ferner können nach vorliegendem Verfahren anionische Farbstoffe auch im Gemisch mit Dispersionsfarbstoffen zu lagerstabilen Präparaten verarbeitet werden. Schliesslich sind unter dem Begriff Farbstoff im vorliegenden auch anionische optische Aufheller zu verstehen.

Im erfindungsgemässen Verfahren können sowohl stark basische, wie auch schwach basische Anionenaustauscher zur Anwendung gelangen. Verwendet werden in erster Linie handelsübliche Ionenaustauscher, vor allem solche mit einer durch Divinylbenzol oder Diäthylenglykoldimethacrylat oder durch Chlormethylierung vernetzten Polystyrol-Matrix. Als funktionelle austauschaktive Gruppen enthalten

diese insbesondere quaternäre Ammonium-Gruppen wie Trimethylammonium-Gruppen oder Hydroxyäthyldimethylammonium-Gruppen oder auch primäre, sekundäre oder tertiäre Amino-Gruppen. In Frage kommen ferner auch solche Austauscher, deren Matrix z.B. aus einer der folgenden natürlichen oder synthetischen Materialien besteht: dreidimensional vernetztes Polysaccharid, z.B. auf Dextran Basis, ferner Cellulose, Dextrin, Acrylamid-Methacrylsäure Copolymerisat oder auch Umsetzungsprodukte aus einem Aminoplast Vorkondensat und einem methylolierten Carbamid. Derartige Austauscher sind aufgrund ihres hochpolymeren Charakters in Wasser unlöslich. Das Verfahren ist jedoch nicht auf solche Austauschertypen beschränkt, sondern lässt sich grundsätzlich auch mit austauschaktiven polymeren Verbindungen durchführen, die mehr oder weniger wasserlöslich sind. Bedingung ist jedoch, dass nach erfolgtem Ionenaustausch, das Umsetzungsprodukt aus Farbstoff und Polymer wasserunlöslich ist und sich auf diese Weise durch mechanische Nasszerkleinerung ebenfalls eine wässrige Dispersion herstellen lässt. Bei den wasserlöslichen Anionenaustauschern handelt es sich beispielsweise um polyquaternäre Ammoniumsalze mit einem Molgewicht von >1.000, vorzugsweise von 10.000 bis 1.000.000.

Die Menge in der der Anionenaustauscher im vorliegenden Verfahren verwendet wird, hängt in erster Linie von dessen Kapazität ab, d.h. der Anzahl an austauschfähigen Gegen-Ionen pro Masse- oder Volumeneinheit des Austauschers. Je nach Austauschkapazität werden auf 1 Gew.Teil Rohfarbstoff ca. 0,2 bis 5 Gew.Teile Ionenaustauscher verwendet. Die Ionenaustauscher werden vorteilhaft in der Perlform verwendet und liegen üblicherweise in der OH- oder Chloridform vor.

Unter dem Begriff Nasszerkleinerungsverfahren wird in erster Linie die Nassmahlung verstanden, die z.B. in einer Rührwerks-Kugelmühle, Sandmühle oder Dyno-Mühle (Marke der W. A. Bachofen Maschinenfabrik, Basel) durchgeführt wird, bis die Teilchengrösse der Farbstoff/Ionenaustauscher-Partikel <10 µm, insbesondere <5 µm ist. Um die Mahlzeit zu verkürzen, hat es sich als vorteilhaft erwiesen, den Anionenaustauscher vor der Umsetzung mit dem Farbstoff einer Vorzerkleinerung zu unterwerfen oder bereits so weit zu mahlen, dass eine Primärteilchengrösse von <10 µm erreicht wird.

Die Mahlung des Anionenaustauschers auf eine derart geringe Teilchengrösse ist in sofern von Vorteil, als dass dann auf ein Nassmahlen der austauschergebundenen Farbstoffe verzichtet werden kann. Danach wird der feingemahlene Austauscher, zweckmässigerweise in Gegenwart eines nichtionischen Dispergiermittels mit dem zu formulierenden Farbstoff umgesetzt und die so erhaltene feinteilige Dispersion — es dürfen bei der Umsetzung keine Agglomerate entstehen — anschliessend nur noch mit den in Flüssigformulierungen üblicherweise enthaltenen Hilfsmitteln versetzt und gegebenenfalls durch Zusatz von Coupagemitteln auf die handelsübliche Farbstärke eingestellt. Dabei erweist es sich als zweckmässig, wasserlösliche Inertsalze und Nebenprodukte, vorteilhaft mit Hilfe eines Membrantrennverfahrens, aus der Farbstoff/Austauscher-Dispersion zu entfernen.

Was die Nasszerkleinerung anbetrifft, so wird diese in Gegenwart eines nichtionischen Dispergiermittels durchgeführt und zwar bevorzugt unter Verwendung eines Aethylenoxid-Addukts aus der Klasse der Anlagerungsprodukte von Aethylenoxid an höhere Fettsäuren, gesättigte oder ungesättigte Fettalkohole, Meroaptane, Fettsäureamide, Fettsäurealkylolamide oder Fettamine oder an Alkylphenole oder Alkylthiophenole mit mindestens 7 Kohlenstoffatomen im Alkylrest, ferner an Ricinolsäureester oder Hydroxyabietylalkohol, wobei auf 1 Mol der genannten Verbindungen bevorzugt 5 bis 100 Mol Aethylenoxid kommen. Einzelne der Aethylenoxideinheiten können durch andere Epoxide, wie z.B. Styroloxid oder insbesondere Propylenoxid ersetzt sein.

Als Aethylenoxid-Addukte sind im einzelnen genannt:

a) Umsetzungsprodukte von gesättigten und/oder ungesättigten Fettalkoholen mit 8 bis 20 C-Atomen, mit 20 bis 100 Mol Aethylenoxid pro Mol Alkohol;

b) Umsetzungsprodukte von Alkylphenolen mit 7 bis 12 C-Atomen im Alkylrest mit 5 bis 20 Mol, vorzugsweise 8 bis 15 Mol, Aethylenoxid je Mol phenolische Hydroxylgruppe;

c) Umsetzungsprodukte von gesättigten und/oder ungesättigten Fettaminen mit 8 bis 20 C-Atomen mit 5 bis 20 Mol Aethylenoxid je Mol Amin;

d) Umsetzungsprodukte von gesättigten und/oder ungesättigten Fettsäuren mit 8 bis 20 C-Atomen mit 5 bis 20 Mol Aethylenoxid je Mol Fettsäure;

e) ein Umsetzungsprodukt aus 1 Mol Ricinolsäureester und 15 Mol Aethylenoxid;

f) ein Umsetzungsprodukt aus 1 Mol Hydroxyabietylalkohol und 25 Mol Aethylenoxid.

Auch Gemische der Aethylenoxid-Addukte nach a) bis f) untereinander sind verwendbar. Diese Gemische erhält man durch Mischen einzelner Umsetzungsprodukte oder direkt durch Aethoxylierung eines Gemisches der den Addukten zugrunde liegenden Verbindungen.

Gute Ergebnisse werden auch mit Umsetzungsprodukten aus Fettsäuren und Hydroxyalkylaminen erhalten, sowie mit N-Perfluoralkyl-N-methyl-polyalkylenoxid-carbamidestern der Formel

$$C_8F_{12}SO_2N(CH_3)\underset{\underset{O}{\|}}{C}-O(CH_2CH_2O)_n-(CH_2-\underset{CH_3}{\underset{|}{C}}HO)_n-C_4H_9$$

mit n = 8 bis 20 oder auch mit Mono-O-dodecyl-Derivaten von Aldosen (siehe B. Havlínová et al., Tenside Detergents *15* (1978) 72—74).

Insbesondere gelangen jedoch im vorliegenden Verfahren Mischpolymerisate aus Aethylenoxid und

Propylenoxid zur Anwendung und zwar vor allem Aethylenoxid/Propylenoxid-Blockpolymere mit einem Molekulargewicht von 6.000 bis 22.500 der folgenden Struktur

$$HO-(CH_2CH_2O)_a-(\underset{\displaystyle CH_3}{\underset{|}{C}}HCH_2O)_b-(CH_2CH_2O)_c-H$$

Die Indizes a, b und c bezeichnen eine ganze Zahl wobei die Summe von a und c eine Zahl zwischen 100 und 400 und b eine Zahl zwischen 30 und 80 ist. Vor allem kommen solche Blockpolymerisate in Betracht, deren Aethylenoxidgehalt bei über 65 Gew.%, insbesondere bei 80 Gew.% liegt.

Von den nichtionischen Dispergiermitteln werden bevorzugt elektrolytarme Qualitäten verwendet, und zwar insbesondere dann, wenn die nach dem erfindungsgemässen Verfahren hergestellten Präparate für den Textildruck bestimmt sind, da synthetische Verdicker vielfach bereits auf kleine Elektrolytmengen mit einem drastischen Viskositätsabfall reagieren.

Verwendet wird das nichtionische Dispergiermittel vorteilhaft in einer Menge von 10 bis 80 Gew.% bezogen auf Rohfarbstoff.

Nach der Behandlung mit dem Anionenaustauscher, vor der Nasszerkleinerung oder im Anschluss daran, oder bei Verwendung eines feingemahlenen Anionenaustauschers, auch ohne entsprechende Nasszerkleinerung, wird die Farbstoff/Austauscher-Suspension oder Dispersion zweckmässigerweise möglichst weitgehend von gelösten Inertsalzen und niedermolekularen Nebenprodukten befreit. Die anorganischen oder auch organischen Salze stammen aus der Farbstoffsynthese und sind über den Rohfarbstoff in die wässrige Suspension oder Dispersion gelangt und/oder beim Ionenaustausch entstanden, z.B. dann, wenn der Anionenaustauscher in der Chlorid-Form verwendet wird. Die Abtrennung der salzhaltigen wässrigen Lösung von dem mit Austauscherharz behandelten Farbstoff kann beispielsweise durch Abdekantieren, Abzentrifugieren oder auch Abfiltrieren erfolgen. Bevorzugt geschieht jedoch im vorliegenden die Entsalzung mittels eines Membrantrennverfahrens, dabei kommen vor allem die folgenden membrangebundenen Filtrationsverfahren zur Anwendung:

Feinfiltration oder Mikrofiltration unter Verwendung von Porenmembranen mit einem Porendurchmesser von 0,5 bis 20 µm

Ultrafiltration unter Verwendung feinporiger Membranen mit einem Porendurchmesser von 10 Å bis 1 µm

Hyperfiltration über Ionenaustauscher- oder Lösungsdiffusions-Membranen mit einem Porendurchmesser von <20 Å

Zur Theorie und Anwendung von Membrantrennprozessen siehe z.B. H. Strathmann; Chemie-Technik *7*, 333 (1978) oder W. Pusch, A. Walch; Angew. Chem. *94*, 670 (1982).

Von diesen Filtrationsverfahren wird im vorliegenden Fall bevorzugt die Hyperfiltration verwendet. Bei diesem Trennverfahren handelt es sich im Gegensatz zur üblichen Filtration, wobei Feststoffteilchen von einer Flüssigkeit abgetrennt werden, um eine selektive Molekulartrennmethode. Die Membran wirkt als Molekularsieb, und vermag aufgelöste Stoffe, bei ausreichender Molekulargrösse an der Membrangrenzfläche zurückzuhalten. Zweckmässig verwendet man Membranen mit einem "cut off level", der eine mindestens 90%ige Retention aufweist, wenn diese einer kontinuierlichen Hyperfiltration während 20 bis 30 Minuten unterworfen werden. Sie lassen Wasser und aufgelöste Stoffe, die auf Grund ihres Molekulargewichts unterhalb der Trenngrenze liegen, bei geringem bis mittlerem Druck durchtreten. Ueblicherweise werden Drucke von 10 bis 100 bar und vorzugsweise von 10 bis 30 bar verwendet.

Bewährt haben sich insbesondere asymmetrische Membranen aus Celluloseacetat, Polyvinylalkohol oder auch Polyacrylnitril, die durch Reaktivfarbstoffe modifiziert sind, die Sulfogruppen und/oder Carboxylgruppen enthalten. Derartige Membranen sind z.B. in der DE-OS 25 05 254 beschrieben. Die Membranen weisen einen Porendurchmesser von 0,1 bis 50 nm auf.

Da der Farbstoff an einen polymeren Träger gebunden ist, werden auch mit der Ultrafiltration in relativ kurzer Zeit sehr gute Entsalzungseffekte erzielt. Als Membranen kommen sowohl solche aus organischem, wie auch anorganischem Material in Frage. Organische Membranmaterialien sind z.B. Polyvinylidenfluorid, Celluloseacetat, Polytetrafluoräthylen, Copolymerisate aus Polyacrylnitril und Vinylpyrrolidon, Polysulfon, Polyamid oder auch hydrophilierte Polyolefine. Anorganische Membranen sind z.B. solche aus porösem Kohlenstoff, dessen Oberfläche mit einer dünnen Schicht aus Zirkonoxid oder Aluminiumoxid belegt ist oder aus porösem Glas. Organische wie anorganische Membranen werden zweckmässigerweise in Rohrform verwendet, wobei mehrere Röhren in einem Rohrmembranmodul zusammengefasst werden.

Aufgrund ihrer guten Beständigkeit gegenüber pH-Wertschwankungen werden bevorzugt anorganische Membranen verwendet.

Die gegebenenfalls entsalzte Farbstoff/Austauscher-Dispersion wird im Anschluss an die Nasszerkleinerung falls nötig, mittels Zwischenabsiebung von einer unwesentlichen Menge grober Partikel befreit und zu einer lagerstabilen Flüssigformulierung weiterverarbeitet.

Zur Herstellung einer handelsfertigen Flüssigform ist die Farbstoff/Austauscher-Dispersion gegebenenfalls nach Zugabe von den, für Flüssigformulierungen üblichen Hilfsmitteln, wie Textilhilfsmitteln, schaumdämpfenden Mitteln, insbesondere Gefrierschutzmitteln, Feuchthaltemitteln, Dispergiermitteln, viskositätsverbessernden Mitteln und/oder Antimikrobika, nur noch durch Verdünnen und/oder mit Hilfe von Coupagemitteln auf einen vorgegebenen Endfarbstoffgehalt einzustellen. Als Gefrierschutzmittel kommen z.B. Polyole wie Aethylenglykol, Monopropylenglykol, Glycerin oder Sorbit, als Einzelkomponenten oder im Gemisch, in Betracht. Als Antimikrobika sind beispielsweise Chloracetamid oder wässrige Formalinlösung genannt und als schaumdämpfende Mittel z.B. solche auf Silikonöl-Basis oder ein Gemisch aus Alkylphosphat und Alkylpolyäthylen-polypropylenglykoläther oder auch tertiäre Acetylenglykole.

Die Durchführung des erfindungsgemässen Verfahrens kann z.B. nach den folgenden zwei Varianten erfolgen. Zum einen nach dem sogenannten Eintopfverfahren und zum anderen in einem Zweistufen-Prozess.

Nach dem Eintopfverfahren wird der Farbstoff mit dem Anionenaustauscher behandelt und gleichzeitig damit in Gegenwart des nichtionischen Dispergiermittels der Nassmahlung unterworfen. Durch den Mahlvorgang erfolgt eine intensive Durchmischung des Systems und der Ionenaustausch läuft relativ rasch ab. Anschliessend erfolgt vorteilhaft die Aufkonzentrierung und Entsalzung der Dispersion mittels Membrantrennverfahren, z.B. der Hyperfiltration. Danach wird die konzentrierte, salzarme Flüssigformulierung noch mit üblichen Hilfsmitteln z.B. einem Feuchthaltemittel versetzt und auf die gewünschte Farbstärke eingestellt.

Neben diesem bevorzugten Verfahren kann die Behandlung des Farbstoffs mit dem Ionenaustauscher und die Nassmahlung auch in diskreten Einzelschritten durchgeführt werden. Im Rahmen dieses zweistufigen Verfahrens kann die Abtrennung der wasserlöslichen Nebenprodukte vorallem der anorganischen Salze beispielsweise durch einfaches Abdekantieren oder Filtrieren bereits vor der Nassmahlung erfolgen. Um die Salze möglichst weitgehend zu entfernen, kann der mit dem Austauscher behandelte Farbstoff nach Abtrennen der wässrigen Phase auch noch gewaschen werden. Anschliessend erfolgt unter Zusatz von nicht-ionischem Dispergator die Nassmahlung; das Umsetzungsprodukt aus Farbstoff und Austauscher kann vor der Nassmahlung getrocknet werden. Die endgültige Formulierung des Farbstoffs wird dann, wie beim Eintopfverfahren beschrieben, durchgeführt.

Grundsätzlich besteht auch die Möglichkeit, den Anionenaustauscher bereits während der Farbstoffsynthese in das Reaktionsmedium zu geben, bzw. die Herstellung des Farbstoffs in Gegenwart eines Anionenaustauschers durchzuführen. Die Synthese des Farbstoffs und dessen Behandlung mit dem Anionenaustauscher verlaufen dann praktisch gleichzeitig, und das Produkt der Synthese ist der bereits an den Austauscher gebundene Farbstoff. Bei dieser Arbeitsweise kann man sich die im allgemeinen bessere Filtrierbarkeit des austauschergebundenen Farbstoffs bereits bei der Aufarbeitung des Reaktionsgemisches zunutze machen. Zur Durchführung dieser Verfahrensvariante verwendet man zweckmässigerweise einen feingemahlenen Austauscher mit einer Teilchengrösse $<10\ \mu m$, vorteilhaft zusammen mit einem Dispergator.

Die Vorteile des erfindungsgemässen Verfahrens sind:

praktisch quantitative Abscheidung des anionischen Farbstoffs aus wässriger Lösung durch den Ionenaustauscher;

die Farbstoff/Austauscher-Suspension bzw. Dispersion lässt sich problemlos filtrieren und vor allem auch mittels Membrantrennverfahren entsalzen und aufkonzentrieren;

störende Nebenprodukte (niedermolekulare neutrale Verbindungen) können ohne Farbstoffverlust aus dem Filterkuchen mit Wasser ausgewaschen werden;

da der Farbstoff direkt im Anschluss an die Synthese mit dem Ionenaustauscher behandelt werden kann ist keine Zwischenisolierung erforderlich;

das Verfahren ist ohne grossen technischen Aufwand leicht durchführbar.

Gegenstand der Erfindung sind ferner die nach vorliegendem Verfahren hergestellten lagerstabilen wässrigen Präparate anionischer Farbstoffe, sowie deren Verwendung zum Färben und Bedrucken von natürlichem oder synthetischem Fasermaterial. Insbesondere eignen sich die Farbstoffpräparate für den Textildruck auf Polyamid; man erhält sprickelfreie konturenscharfe Drucke. Bei den Präparaten handelt es sich um echte Dispersionen, sie sind dünnflüssig und lassen sich über mehrere Monate bei Temperaturen im Bereich von −10°C bis +40°C aufbewahren, ohne dass sich Agglomerate oder ein festes Sediment bildet. Die Farbstoffpräparate sind gegenüber Temperaturschwankungen weitgehend unempfindlich. Ein Bodensatz lässt sich durch einfaches Umrühren oder Schütteln leicht wieder homogen verteilen. Auch bei längerer Lagerung kommt es zu keinen Rekristallisationserscheinungen. Die erfindungsgemässen Präparate enthalten keine organischen Lösungsmittel.

Aus der DE-A-2 805 891 ist ein Verfahren zur Herstellung konzentrierter wässriger Farbstoff- und Aufhellerlösungen von ionischen Farbstoffen bekannt, bei dem die schwerlöslichen Farbstoffsalze mittels eines Membrantrennprozesses und unter Zusatz einer ionischen Verbindung von den anorganischen Salzen weitgehend befreit und zu leichter löslichen Farbstoffsalzen umgesetzt werden.

In den nachfolgenden Beispielen, welche die Erfindung näher erläutern, bedeuten Teile, falls nicht anders angegeben, Gewichtsteile und Prozente Gewichtsprozente.

Beispiel 1

In eine Lösung bestehend aus 1257,5 Teilen Wasser und 48,0 Teilen eines Blockpolymers (Mol.Gew. ca. 16500) aus Propylenoxid und Aethylenoxid mit mittelständiger Propylenoxideinheit und einem Aethylenoxidgehalt von 80% werden 36,1 Teile Anionenaustauscher (wasserunlösliches Harz auf Basis Styrol-Divinylbenzol mit quaternären Ammoniumgruppen als austauschaktive Reste) eingetragen. Der Ionenaustauscher wird in der Chlorid-Form verwendet, die Totalkapazität des Austauschers beträgt 3 mval $CaCO_3$/g. Anschliessend gibt man 258,5 Teile Presskuchen (Trocken-Gehalt 28,6%) des Farbstoffes der Formel

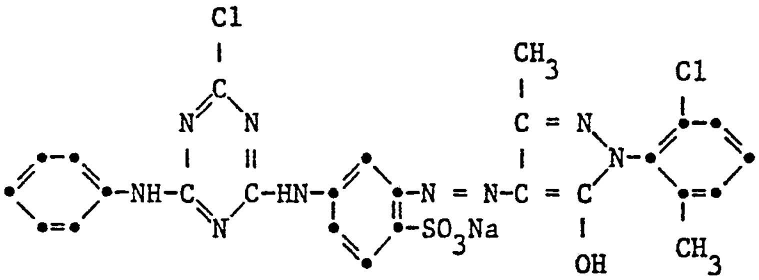

portionenweise unter Rühren hinzu und homogenisiert die Suspension. Mit Hilfe einer Sandmühle wird das Gemisch darauf so lange gemahlen und dispergiert bis der Ionenaustausch vollständig und in der Mischung kein freier Farbstoff mehr vorhanden ist. Die Teilchengrösse der Farbstoff/Austauscher-Dispersion liegt bei <5 µm; die Mehrzahl der Partikel ist <2 µm. Die erhaltene feine Dispersion wird von den Mahlkörpern abgetrennt und durch Hyperfiltration aufkonzentriert und entsalzt. Verwendet wird eine anionisch modifizierte Celluloseacetat-Membran mit einem cut off level von 500. Der aufkonzentrierten Dispersion werden 15% Propylenglykol als Feuchthaltemittel beigemischt. Die Dispersion enthält 20,4% Farbstoff. Die Formulierung ist dünnflüssig, lagerbeständig und zeigt auch nach mehrmonatiger Lagerung keine Sedimentation. Die Flüssigformulierung ergibt nach Einarbeitung in eine Druckpaste auf Polyamid einen sprickelfreien Druck ohne Grauschleier. Das Druckergebnis fällt vor und nach der Lagerung des Farbstoffpräparats gleich gut aus. In einem Parallelversuch ohne Anionenaustauscher erhält man mit dem gleichen Farbstoff eine Dispersion, die während der Hyperfiltration die Membran verstopft und sich daher auf diese Art und Weise weder entsalzen noch aufkonzentrieren lässt.

Eine einwandfrei lagerbeständige Farbstoffdispersion erhält man auch, wenn man anstelle des Anionenaustauschers auf Basis von Styrol-Divinylbenzol und anstelle des Aethylenoxid/Propylenoxid-Blockpolymerisats einen der in der folgenden Tabelle aufgeführten Anionenaustauscher bzw. nichtionischen Dispergatoren verwendet:

| Beispiel | Anionenaustauscher | Dispergiermittel |
|---|---|---|
| 2 | dreidimensional vernetztes Polysaccharid; austauschaktive Gruppen:<br>$-OC_2H_4N(C_2H_5)_2$ | Fettalkoholäthoxylat<br>$R-O-(CH_2CH_2O)_nH$<br>R = Alkyl $C_{11-18}$<br>n im Mittel = 18<br>(MG ~ 1000) |
| 3 | dreidimensional vernetztes Polysaccharid; austauschaktive Gruppen: $-OCH_2-C_6H_4-NH_2$ | Ricinusöläthoxylat 1 Mol Ricinoleinsäure + ca. 15 Mol Aethylenoxid |
| 4 | modifizierte Cellulose; austauschaktive Gruppen:<br>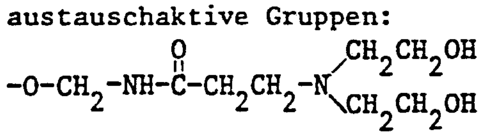<br>Chlorid-Form | Nonylphenol-pentadecaglykoläther |
| 5 | modifizierte Cellulose; austauschaktive Gruppen:<br>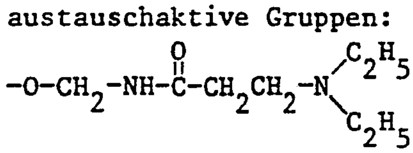<br>Chlorid-Form | Cetyl-Stearylalkohol, veräthert mit 25 Mol Aethylenoxid |
| 6 | modifiziertes Dextrin; austauschaktive Gruppen:<br>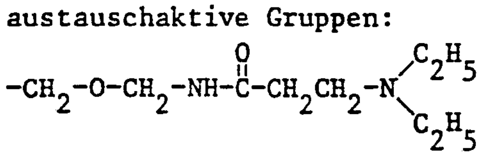<br>Chlorid-Form | Stearinsäureäthoxylat 1 Mol Fettsäure + ca. 9 Mol Aethylenoxid |

Beispiel 7

In eine Lösung aus 1197,5 Teilen Wasser und 60 Teilen Aethylenoxid/Propylenoxid-Blockpolymer, werden 160,1 Teile trockengemahlener Anionenaustauscher (Teilchengrösse <100 µm) und 282,4 Teile Farbstoff portionsweise unter Rühren eingetragen und die Suspension gut homogenisiert. Bei dem Blockpolymer, dem Ionenaustauscher und dem Farbstoff handelt es sich um die gleichen, wie in Beispiel 1 verwendeten Produkte bzw. Verbindungen. Mit Hilfe einer Dyno-Mühle wird das Gemisch so lange gemahlen und dispergiert bis der Ionenaustausch vollständig und in der Mischung kein freier Farbstoff mehr vorhanden ist. Die Teilchengrösse der Farbstoff/Austauscher-Dispersion liegt bei <5 µm; die Mehrzahl der Partikel ist <2 µm.

Die erhaltene feine Dispersion wird von den Mahlkörpern abgetrennt und Zwecks Aufkonzentrieren und Entsalzung der Hyperfiltration, wie im Beispiel 1 angegeben, unterworfen. Zu der aufkonzentrierten Dispersion gibt man 15% Propylenglykol als Feuchthaltemittel.

Die auf diese Weise hergestellte Dispersion enthält 32,0% Farbstoff. Die Flüssigformulierung ist dünnflüssig, lagerbeständig und zeigt während der Lagerung keine Sedimentation. Mit der Formulierung erhält man auch nach der Lagerung auf Polyamid einen sprickelfreien Druck ohne Grauschleier.

Beispiel 8

In eine Lösung aus 1197,5 Teilen Wasser und 60 Teilen Aethylenoxid/Propylenoxid-Blockpolymer, werden 160,1 Teile trockengemahlener Anionenaustauscher (Teilchengrösse <100 µm) eingetragen. Blockpolymer und Ionenaustauscher sind die gleichen wie in Beispiel 1. Die Suspension wird mit Hilfe einer geschlossenen Mühle so lange gemahlen, bis die Teilchengrösse <5 µm beträgt. Zu dem nassgemahlenen Ionenaustauscher werden dann 282,4 Teile des in Beispiel 1 erwähnten Farbstoffes unter Rühren zugegeben. Die Mischung wird mit der Dyno-Mühle, wie in Beispiel 2 angegeben gemahlen.

Auch hier wird die Dispersion zur Aufkonzentrierung und Entsalzung der Hyperfiltration unterworfen. Der aufkonzentrierten Dispersion werden 15% Propylenglykol als Feuchthaltemittel und 1% Formalin als Konservierungsmittel beigemischt. Der Gehalt an Farbstoff in der Formulierung beträgt 18,9%. Die Formulierung ist dünnflüssig und lagerstabil und auch noch nach längerer Lagerung einwandfrei für den Druck auf Polyamid geeignet.

Beispiel 9

In eine Suspension aus 16 Teilen Anionenaustauscher (wasserunlösliches Styrol-Divinylbenzol-Mischpolymerisat mit quaternären Ammoniumgruppen in der Chlorid-Form) in 561,6 Teilen deionisiertem Wasser werden 130,4 Teile Presskuchen des in Beispiel 1 erwähnten Farbstoffs eingetragen (Trockengehalt 28,6%) und so lange gerührt, bis kein freier Farbstoff mehr nachweisbar ist. Anschliessend wird das, durch den Ionenaustausch entstandene Natriumchlorid durch Waschen mit deionisiertem Wasser von dem austauschergebundenen Farbstoff abgetrennt und dieser dann bei 80°C im Vakuum getrocknet. 39 Teile des trockenen, salzfreien Produkts werden anschliessend zusammen mit 6 Teilen Aethylenoxid/Propylenoxid-Blockpolymer (gleicher Typ wie in Beispiel 1), 15 Teilen Propylenglykol und 40 Teilen Wasser in einer Sandmühle so lange gemahlen und dispergiert, bis die Teilchengrösse der Partikel bei <5 µm liegt. Die erhaltene feine Dispersion wird von den Mahlkörpern abgetrennt. Sie ist lagerstabil und ergibt im Textildruck auf Polyamidmaterial einwandfreie Ergebnisse.

Beispiel 10

127,3 Teile des Presskuchens vom Farbstoff (Trocken-Gehalt 28,6%) der Formel erwähnt in Beispiel 1 werden in 1675 Teilen deionisiertem Wasser bei 80°C gelöst. Die Lösung wird durch ein Stoff-Filter filtriert. Nun werden unter Rühren 167,5 Teile einer 18,4%igen wässrigen Lösung eines Polyquaternärammoniumchlorid-Salzes auf Basis eines Polyvinylpyrrolidon-Mischpolymerisats mit einem Mol.Gew. von ca. 10.000 langsam zu der Farbstofflösung, welche eine Temperatur von 60°C hat, getropft. Es tritt sofort eine Fällung ein. Die Mischung wird noch 1 Stunde bei absteigender Temperatur gerührt. Der Niederschlag wird über ein Stoff-Filter abgesaugt und mit deionisiertem Wasser salzfrei gewaschen. Der ionenaustauschergebundene Farbstoff wird bei 80°C unter Vakuum getrocknet. Anschliessend werden 53 Teile des trockenen Produkts mit 5 Teilen eines Blockpolymers aus Propylenoxid und Ethylenoxid, (MG und Aethylenoxidgehalt siehe Beispiel 1), 15 Teilen Propylenglykol und 37 Teilen Wasser mit Hilfe einer Sandmühle solange gemahlen und dispergiert bis die Teilchengrösse der Partikel bei <5 µm liegt. So erhält man eine lagerstabile, dünnflüssige Farbstoffdispersion mit guten anwendungstechnischen Eigenschaften.

Eine dünnflüssige Farbstoffdispersion mit guter Lagerfähigkeit und vergleichbar guten anwendungstechnischen Eigenschaften erhält man, wenn man anstelle des Polyvinylpyrrolidon-Mischpolymerisats die wässrige Lösung eines Poly-diallyl-dimethyl-ammoniumchlorids verwendet.

Beispiel 11

In eine Lösung bestehend aus 1180 Teilen Wasser und 51 Teilen eines Blockpolymers aus Propylenoxid und Ethylenoxid (MG und Aethylenoxidgehalt siehe Beispiel 1) werden unter Rühren portionenweise 129 Teile trockengemahlener Anionenaustauscher (Teilchengrösse <100 µm) eingetragen. Es wird der gleiche Austauscher verwendet wie in Beispiel 1. Die Suspension wird mit Hilfe einer Dyno Mühle so lange gemahlen, bis die Teilchengrösse <5 µm beträgt. Zu dem nassgemahlenen Ionenaustauscher-Harz werden dann 340 Teile Presskuchen (Trocken-Gehalt: 60%) des Farbstoffes der Formel

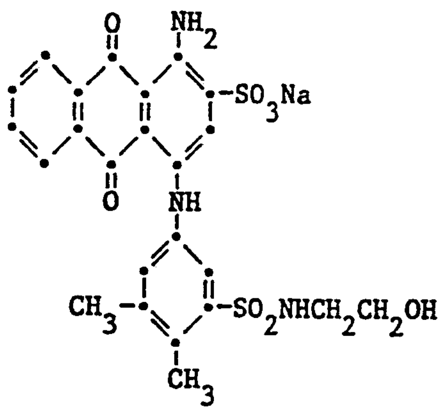

unter Rühren zugegeben. Die Mischung wird mit der geschlossenen Mühle (Dyno-Mühle), wie in Beispiel 2 angegeben gemahlen, kann aber auch ohne weitere Mahlung gleich anschliessend zwecks Aufkonzentrieren und Entsalzen der Ultrafiltration unterworfen werden. Zur Ultrafiltration verwendet man eine Zirkonoxid-Membran (Graphitmatrix, die auf der Innenseite mit Zirkonoxid beschichtet ist) in Rohrform, mit einem cut-off level von ca. 20.000. Der aufkonzentrierten Dispersion werden 15%

Propylenglykol und 5% eines Blockpolymers aus Propylenoxid und Ethylenoxid (MG und Aethylenoxid siehe Beispiel 1) jeweils als Feuchthaltemittel und Dispergator beigemischt. Der Gehalt an Farbstoff in der Formulierung beträgt 20%. So erhält man eine stabile, dünnflüssige Farbstoffdispersion mit ähnlich guten Eigenschaften wie in Beispiel 1 aufgeführt.

Beispiel 12

In eine Lösung bestehend aus 3203 Teilen Wasser und 135 Teilen eines Blockpolymers aus Propylenoxid und Ethylenoxid (MG und Aethylenoxidgehalt siehe Beispiel 1) werden unter Rühren portionenweise 320 Teile trockengemahlener Anionenaustauscher (Teilchengrösse <100 µm) eingetragen. Es wird der gleiche Austauscher verwendet wie in Beispiel 1. Die Suspension wird mit Hilfe einer Dyno Mühle so lange gemahlen, bis die Teilchengrösse <5 µm beträgt. Zu dem nassgemahlenen Ionenaustauscher-Harz werden dann 842 Teile Presskuchen (Trockengehalt: 56%) des Farbstoffes der Formel

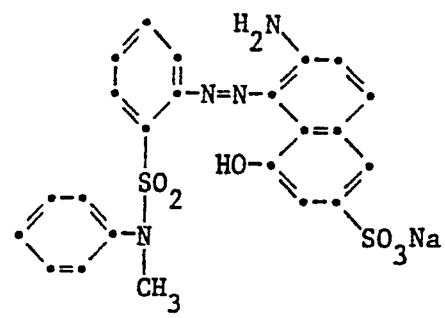

unter Rühren zugegeben. Die Mischung wird mit der geschlossenen Mühle (Dyno-Mühle) wie in Beispiel 2 angegeben gemahlen und anschliessend zwecks Aufkonzentrieren und Entsalzen einer Hyperfiltration unterworfen, wie in Beispiel 1 beschrieben. Der aufkonzentrierten Dispersion werden 15% Propylenglykol als Feuchthaltemittel beigemischt. Der Gehalt an Farbstoff in der Formulierung beträgt 27%. Man erhält eine stabile, dünnflüssige Farbstoffdispersion mit ähnlich guten Eigenschaften, wie in Beispiel 1 aufgeführt.

Beispiel 13

In eine Lösung bestehend aus 926 Teilen Wasser und 51 Teilen eines Blockpolymers aus Propylenoxid und Ethylenoxid (MG und Aethylenoxidgehalt siehe Beispiel 1) werden unter Rühren portionenweise 207 Teile trockengemahlener Anionenaustauscher (Teilchengrösse <100 µm) eingetragen. Es wird der gleiche Austauscher verwendet wie in Beispiel 1. Die Suspension wird mit Hilfe einer Dyno Mühle so lange gemahlen, bis die Teilchengrösse <5 µm beträgt. Zu dem nassgemahlenen Ionenaustauscher-Harz werden dann 516 Teile Presskuchen (Trocken-Gehalt: 40% des Farbstoffes (Gemisch aus zwei Komponenten) der Formeln

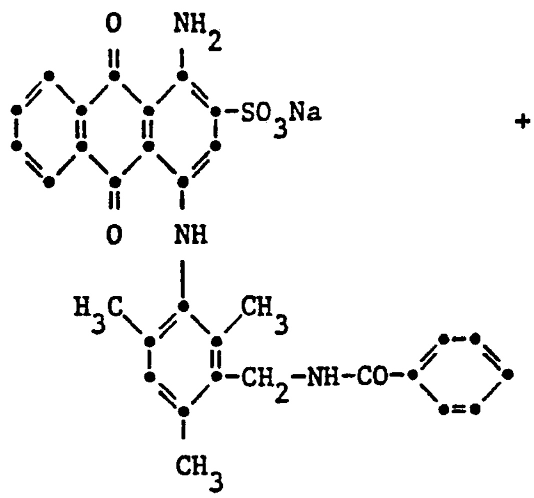

+

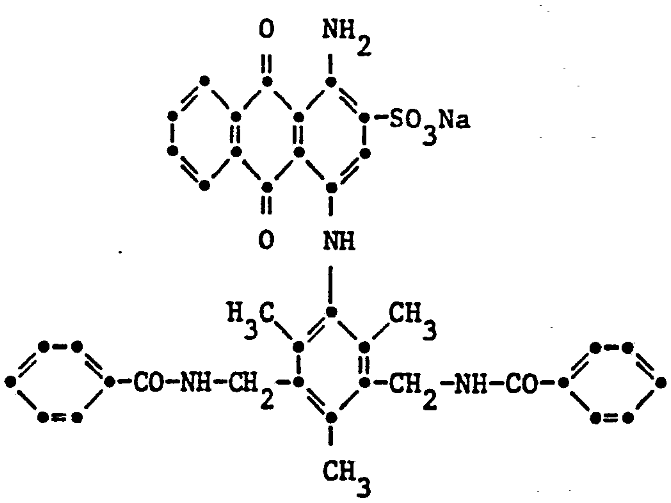

unter Rühren zugegeben. Die Mischung wird mit der geschlossenen Mühle (Dyno-Mühle), wie in Beispiel 2 angegeben gemahlen, kann aber auch ohne Mahlen gleich anschliessend zwecks Aufkonzentrieren und Entsalzen einer Hyperfiltration unterworfen werden, wie in Beispiel 1 beschrieben. Der aufkonzentrierten Dispersion werden 15% Propylenglykol als Feuchthaltemittel beigemischt. Der Gehalt an Farbstoff in der

Formulierung beträgt 25,2%. So erhält man eine stabile, dünnflüssige Farbstoffdispersion mit ähnlich guten Eigenschaften wie in Beispiel 1 aufgeführt.

Verwendet man anstelle des Anionenaustauschers auf Basis von Styrol-Divinylbenzol und anstelle des Aethylenoxid/Propylenoxid-Blockpolymerisats einen der in der folgenden Tabelle aufgeführten Anionenaustauscher bzw. Dispergatoren, so erhält man ebenfalls eine einwandfreie lagerbeständige Farbstoffdispersion.

| Beispiel | Anionenaustauscher | Dispergiermittel |
|---|---|---|
| 14 | dreidimensional vernetztes Polysaccharid; austauschaktive Gruppen: $-OC_2H_4NH_2$ | p-tert.-Octylphenol + ca. 8 Mol Aethylenoxid |
| 15 | Acrylamid-Methacrylsäure Copolymerisat verestert mit N-Trimethylaminoäthanol (MG ca. 800.000) als Methosulfat | Aethylenoxid/Propylenoxid-Blockpolymer MG~ 20.000 Aethylenoxidgehalt: 70 % |
| 16 | Umsetzungsprodukt aus einem Aminoplast-Vorkondensat und einem methylolierten Carbamid gemäss EP-A-0051044 | Oelsäureamidpolyglykoläther Aethoxylierungsgrad~ 12-14 |
| 17 | modifizierte Cellulose; austauschaktive Gruppen: 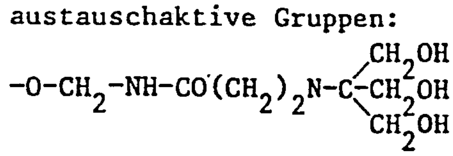 Hydroxid-Form | Cocosfettsäureäthanolamid |

Beispiel 18

20,0 Teile des in Beispiel 13 erwähnten Farbstoffes werden in 1500 Teilen deionisiertem Wasser bei 80°C gelöst. Die Lösung wird durch Stoff-Filter filtriert. Nun werden unter Rühren 114,0 Teile 17%ige wässerige Lösung eines Polyquaternärammoniumchlorid-Salzes (wie Beispiel 5) mit einem Mol.Gew. von ca. 10.000 langsam zu der auf 60°C abgekühlten Farbstofflösung zugetropft. Es tritt sofort eine Fällung ein. Die Mischung wird noch 1 Stunde bei absteigender Temperatur gerührt. Der Niederschlag wird mit einem Stoff-Filter abgesaugt und mit deionisiertem Wasser salzfrei gewaschen. Der Filterrückstand wird bei 80°C unter Vakuum getrocknet. 27,5 Teile des trockenen Produkts werden mit 5 Teilen eines Blockpolymers aus Propylenoxid und Ethylenoxid (MG und Aethylenoxidgehalt siehe Beispiel 1), 15 Teilen Propylenglykol und 52,5 Teilen Wasser mit Hilfe einer Sandmühle so lange gemahlen und dispergiert, bis die Teilchengrösse der Partikel <5 µm beträgt. Die erhaltene feine Dispersion wird von den Mahlperlen abgetrennt. Man erhält eine stabile dünnflüssige Farbstoffdispersion mit ähnlich guten Eigenschaften wie in Beispiel 1 angegeben.

Beispiel 19

53 Teile eines gemäss Beispiel 13 formulierten, flüssigen 25%igen Farbpräparates werden in 947 Teile einer Stammverdickung folgender Zusammensetzung eingerührt und homogenisiert:

| | |
|---|---|
| 50 | Teile Harnstoff |
| 290 | Teile Wasser |
| 600 | Teile Guar-Gum Verdicker (8%ige Lösung) und |
| 60 | Teile Ammoniumtartratlösung einer Dichte von 1,12 |
| 1000 | Teile |

Mit der daraus resultierenden Druckpaste wird auf einer Flachfilmdruckmaschine ein Polyamidgewebe bedruckt und anschliessend bei ca. 70°C getrocknet. So erhält man einen sprickelfreien Druck ohne Grauschleier.

**Patentansprüche**

1. Verfahren zur Herstellung lagerstabiler wässriger Präparate von anionischen Farbstoffen, dadurch gekennzeichnet, dass man den in Wasser gelösten und/oder suspendierten Farbstoff mit einem polymeren Anionenaustauscher behandelt, den austauschergebundenen Farbstoff gleichzeitig damit und/oder im Anschluss daran in Gegenwart eines nichtionischen Dispergiermittels einer mechanischen Nasszerkleinerung unterwirft und die wässrige Dispersion mit den in dispersen Farbstoffflüssigformulierungen üblicherweise enthaltenen Hilfsmitteln versetzt.

2. Verfahren gemäss Anspruch 1, dadurch gekennzeichnet, dass man die Behandlung des Farbstoffs mit dem Anionenaustauscher und die Nasszerkleinerung gleichzeitig durchführt.

3. Verfahren gemäss Anspruch 1, dadurch gekennzeichnet, dass man polymere wasserunlösliche Anionenaustauscher mit einer durch quaternäre Ammoniumgruppen substituierten Polystyrol-Matrix verwendet, welche durch Divinylbenzol, Diäthylenglykoldimethacrylat oder durch Chlormethylierung vernetzt ist.

4. Verfahren gemäss den Ansprüchen 1 und 3, dadurch gekennzeichnet, dass man die Nasszerkleinerung in Gegenwart eines Aethylenoxid-Propylenoxid-Blockpolymeren mit einem Molgewicht von 6.000 bis 22.500 und der Struktur

$$HO-(CH_2CH_2O)_a-(\underset{CH_3}{\underset{|}{CH}}CH_2O)_b-(CH_2CH_2O)_c-H$$

als nichtionisches Dispergiermittel durchführt, wobei die Indizes a, b und c eine ganze Zahl bezeichnen, mit der Massgabe, dass die Summe von a und c eine Zahl zwischen 100 und 400 und b eine Zahl zwischen 30 und 80 ist.

5. Verfahren gemäss Anspruch 1, dadurch gekennzeichnet, dass man das nichtionische Dispergiermittel in einer Menge von 10 bis 80 Gew.% bezogen auf Rohfarbstoff verwendet.

6. Verfahren gemäss Ansprüchen 1 bis 5, dadurch gekennzeichnet, dass man den austauschergebundenen Farbstoff vor oder nach der Nasszerkleinerung von wasserlöslichen Inertsalzen und Nebenprodukten befreit.

7. Verfahren gemäss Anspruch 1, dadurch gekennzeichnet, dass man einen Anionenaustauscher einer Teilchengrösse $<10$ µm verwendet und den austauschergebundenen Farbstoff ohne Nasszerkleinerung mit einem nichtionischen Dispergiermittel und den in dispersen Flüssigformulierungen üblicherweise enthaltenen Hilfsmitteln versetzt und gegebenenfalls vor/oder nach Zusatz der Hilfsmittel von wasserlöslichen Inertsalzen und Nebenprodukten befreit.

8. Verfahren gemäss den Ansprüchen 6 und 7, dadurch gekennzeichnet, dass die Abtrennung der wasserlöslichen Salze und Nebenprodukte mittels eines Membrantrennverfahrens, insbesondere der Hyperfiltration erfolgt.

9. Verfahren gemäss Anspruch 1, dadurch gekennzeichnet, dass man als für Farbstoffflüssigformulierungen übliche Hilfsmittel, Gefrierschutzmittel, Feuchthaltemittel, Dispergiermittel, viskositätsverbessernde Mittel und/oder Antimikrobika verwendet.

10. Die nach dem Verfahren gemäss Anspruch 1 erhaltenen lagerstabilen Farbstoffdispersionen.

11. Verwendung der wässrigen Farbstoffpräparate erhalten gemäss Anspruch 1 zum Färben und Bedrucken von natürlichen und synthetischen Fasermaterialien, insbesondere Textilmaterial aus Polyamidfasern.

**Revendications**

1. Procédé de fabrication de préparations aqueuses, stables au stockage, de colorants anioniques, caractérisé en ce que l'on traite le colorant, dissous et/ou mis en suspension dans de l'eau, avec un échangeur d'anions polymère, on soumet le colorant fixé à l'échangeur, simultanément et/ou subséquemment, en présence d'un dispersant non-ionique, à une fragmentation mécanique au mouillé, et on ajoute à la dispersion aqueuse les adjuvants habituellement contenus dans les formulations liquides de colorants dispersés.

2. Procédé conforme à la revendication 1, caractérisé en ce que le traitement du colorant avec l'échangeur d'anions et la fragmentation au mouillé sont effectués simultanément.

3. Procédé conforme à la revendication 1, caractérisé en ce que l'on utilise un échangeur d'anions polymère, insoluble dans l'eau, comportant une matrice de polystyrène substitué par des groupes ammonium quaternaire et réticulé à l'aide de divinylbenzène, de diméthacrylate de diéthylèneglycol, ou bien par chlorométhylation.

4. Procédé conforme aux revendications 1 et 3, caractérisé en ce que l'on effectue la fragmentation au mouillé en présence, à titre de dispersant non-ionique, d'un copolymère séquencé d'oxyde d'éthylène et d'oxyde de propylène, présentant une masse moléculaire de 6000 à 22 500 et la structure

$$HO-(CH_2CH_2O)_a-(CH(CH_3)CH_2O)_b-(CH_2CH_2O)_c-H$$

dans laquelle les indices a, b et c représentent des nombres entiers qui obéissent aux conditions suivantes: la somme de a et c vaut entre 100 et 400, et b vaut entre 30 et 80.

5. Procédé conforme à la revendication 1, caractérisé en ce que l'on utilise le dispersant non-ionique à raison de 10 à 80% en poids, par rapport au colorant brut.

6. Procédé conforme aux revendications 1 à 5, caractérisé en ce que le colorant fixé à l'échangeur est débarrassé, avant ou après la fragmentation au mouillé, des sels inertes et sous-produits solubles dans l'eau.

7. Procédé conforme à la revendication 1, caractérisé en ce que l'on utilise un échangeur d'anions présentant une dimension de particules inférieure à 10 µm et en ce que l'on ajoute, au colorant fixé sur l'échangeur, sans fragmentation au mouillé, un dispersant non-ionique et les adjuvants habituellement contenus dans les formulations liquides dispersées, et en ce qu'on le débarrasse éventuellement, avant ou après addition des adjuvants, des sels inertes et sous-produits solubles dans l'eau.

8. Procédé conforme aux revendications 6 et 7, caractérisé en ce que l'élimination des sels et sous-produits solubles dans l'eau est effectuée selon un procédé de séparation par membrane, en particulier par hyperfiltration.

9. Procédé conforme à la revendication 1, caractérisé en ce que l'on utilise, en tant qu'adjuvants habituels des formulations liquides de colorants, un agent antigel, un agent de rétention d'humidité, un agent dispersant, un agent améliorant la viscosité et/ou un agent antimicrobien.

10. Les dispersions de colorants stables au stockage, obtenues selon le procédé conforme à la revendication 1.

11. Utilisation des préparations aqueuses de colorants obtenues selon la revendication 1, pour la teinture et l'impression de matériaux fibreux naturels ou synthétiques, en particulier de matériaux textiles en fibres de polyamide.

**Claims**

1. A process for the preparation of a storage stable aqueous formulation of anionic dyes, which process comprises treating the dye dissolved and/or suspended in water with a polymeric anion exchanger, simultaneously and/or subsequently subjecting the exchanger-bonded dye to a mechanical wet grinding, in the presence of a nonionic dispersant, and adding to the resultant aqueous dispersion the assistants customarily contained in disperse liquid dye formulations.

2. A process according to claim 1, wherein the treatment of the dye with the anion exchanger and the wet grinding are carried out simultaneously.

3. A process according to claim 1, which comprises the use of a polymeric water-insoluble anion exchanger with a polystyrene matrix which is substituted by quaternary ammonium groups and is crosslinked by divinylbenzene, diethylene glycol dimethacrylate or by chloromethylation.

4. A process according to either of claims 1 and 3, wherein the wet grinding is carried out in the presence of an ethylene oxide/propylene oxide block polymer with a molecular weight of 6000 to 22,500 and having the structure

$$HO-(CH_2CH_2O)_a-(CH(CH_3)CH_2O)_b-(CH_2CH_2O)_c-H$$

as nonionic dispersant, the indices a, b and c denoting a whole number, with the proviso that the sum of a and c is a number between 100 and 400 and b is a number between 30 and 80.

5. A process according to claim 1, wherein the nonionic dispersant is used in an amount of 10 to 80% by weight, based on crude dye.

6. A process according to any one of claims 1 to 5, wherein the exchanger-bonded dye is freed from water-soluble inert salts and by-products before or after the wet grinding.

7. A process according to claim 1, wherein the anion exchanger has a particle size of <10 µm and the exchanger-bonded dye is mixed, without wet grinding, with a nonionic dispersant and the assistants customarily contained in disperse liquid formulations and, in an optional further step, the dye/ion exchange resin dispersion is freed from water-soluble inert salts and by-products, before or after the addition of the assistants.

8. A process according to either of claims 6 and 7, wherein the removal of water-soluble salts and by-products is carried out by means of a membrane separation process, in particular by hyperfiltration.

9. A process according to claim 1, wherein the assistants customarily added to liquid dye formulations are those selected from the group consisting of antifreeze agents, humectants, dispersants, viscosity improvers and/or microbicides.

10. A storage-stable dye dispersion obtained by the process according to claim 1.

11. Use of an aqueous dye formulation obtained according to claim 1 for dyeing or printing natural or synthetic fibre material, in particular textile material made from polyamide fibres.